# DEMANDE DE BREVET EUROPEEN

(11) **EP 1 956 580 A1**
(43) Date de publication de la demande: **13.08.2008**
(21) Numéro de dépôt: 06126382.8
(22) Date de dépôt: 18.12.2006
(51) Int. Cl.: G09G 3/32, B32B 17/00

(54) **Panneau d'affichage**

(71) Demandeur: AGC Flat Glass Europe SA, 1170 Bruxelles (BE)
(72) Inventeur: La désignation de l'inventeur n'a pas encore été déposée
(74) Mandataire: Decamps, Alain René François

(57) **Abrégé**

Panneau d'affichage ayant une résolution d'affichage adaptée à ses dimensions et comprenant des dispositifs lumineux élémentaires constituant les pixels dont l'allumage et l'intensité sont pilotés individuellement par l'intermédiaire d'un système de contrôle à structure hiérarchique, le panneau se présentant sous la forme d'un corps plat composite complètement fermé qui comprend un substrat rigide sur lequel sont fixés les dispositifs lumineux dont les conducteurs électriques d'alimentation et de contrôle sont situés à l'intérieur du panneau et sont invisibles à l'oeil nu.

## Description

La présente invention concerne un panneau d'affichage dont la résolution est adaptée à ses dimensions ainsi qu'à la distance optimale par rapport au panneau qu'un opérateur choisira pour une lecture confortable. Le panneau comprend des pixels lumineux pilotés par un système de contrôle.

Des panneaux d'affichage lumineux de grandes dimensions aptes à être accrochés sur la façade extérieure de bâtiments et pouvoir être lus de loin de manière confortable sont connus. Ils impliquent cependant un câblage d'alimentation et de pilotage des pixels relativement complexe, ce qui nuit généralement à la transparence de la totalité de la surface du panneau et à sa fiabilité à long terme en ce qui concerne le fonctionnement de tous les pixels du panneau. Généralement, une maintenance fréquente de ces panneaux connus est nécessaire et le coût peut rapidement en devenir assez important.

L'invention remédie à ces inconvénients en fournissant un panneau d'affichage lumineux ne comportant pas de câblage apparent de chaque pixel et ne nécessitant qu'une maintenance réduite.

A cet effet, l'invention concerne un panneau d'affichage lumineux tel que défini dans la revendication 1.

Les revendications dépendantes définissent d'autres formes possibles de réalisation de l'invention, dont certaines sont préférées.
Outre la réduction des coûts déjà mentionnée, l'invention peut aussi apporter un ou plusieurs des avantages suivants :
- réalisation aisée d'une version transparente à la lumière visible;
- intégration possible dans un vitrage multiple;
- adaptation à la réalisation de façades de bâtiment entières communicantes.

Le panneau d'affichage selon l'invention a une résolution adaptée à ses dimensions, c'est-à-dire qu'elle sera d'autant moins élevée que la taille du panneau sera grande et adaptée à une vision éloignée. Le panneau comprend des dispositifs lumineux qui constituent les pixels d'information. Ces dispositifs sont des sources de lumière blanche ou colorée apparaissant comme des points lumineux à la distance habituelle de lecture. Selon l'invention, l'allumage et l'extinction de ces sources lumineuses sont pilotées individuellement par un système de contrôle à structure hiérarchique. Par système de contrôle à structure hiérarchique, on désigne un système de commande et de contrôle comprenant des unités de contrôles interconnectées selon une topologie arborescente comprenant plusieurs niveaux, par exemple une unité de contrôle centrale ou générale connectée à un ensemble d'unités de contrôle locales, éventuellement via des unités de contrôle intermédiaire. Selon l'invention, l'intensité de chaque pixel peut aussi être pilotée par le même système de contrôle à structure hiérarchique.

Le panneau d'affichage conforme à l'invention se présente sous la forme d'un corps plat composite complètement fermé. Par corps plat, on entend désigner un solide dont l'épaisseur est faible par rapport à ses autres dimensions. Le panneau est un corps composite comprenant un substrat rigide sur lequel sont fixés les dispositifs lumineux. Par substrat rigide, on entend un corps, plat lui aussi, de résistance mécanique aux sollicitations de flexion et de torsion suffisante pour ne pas se déformer sous l'action de sollicitations extérieures que l'on rencontre couramment dans le milieu ambiant dans lequel on utilise généralement le panneau. En particulier, les substrats rigides utilisés résistent généralement bien au vent, et aux intempéries en général, que l'on rencontre dans les milieux d'utilisation de ces panneaux, y compris la glace et la neige. Des dispositifs lumineux sont fixés sur le substrat rigide et l'ensemble substrat plus dispositifs lumineux ainsi que tous les conducteurs électriques d'alimentation et de contrôle de ces derniers sont situés à l'intérieur du corps composite constituant le panneau d'affichage. Par ailleurs, selon l'invention, ces conducteurs électriques sont invisibles à l'oeil nu.

Un premier mode de réalisation préféré du panneau d'affichage conforme à l'invention est celui dans lequel le panneau est transparent à la lumière. Le plus souvent, la transparence du panneau est telle que le coefficient de transmission de la lumière à travers lui est maximum pour toutes les longueurs d'ondes appartenant au spectre de la lumière visible. Très fréquemment, le panneau est aussi capable de transmettre une proportion non négligeable des radiations lumineuses jouxtant immédiatement les longueurs d'onde du spectre visible, aussi bien en deçà qu'au-delà de celui-ci (lumières IR et UV).

Dans un autre mode de réalisation préféré du panneau d'affichage selon l'invention, compatible avec le précédent, le substrat rigide du corps composite constituant le panneau est du verre, éventuellement transparent. En variante, il est possible que l'ensemble du corps plat composite complètement fermé soit un vitrage feuilleté comprenant au moins une feuille de matière plastique laminée en sandwich entre deux feuilles de verre du corps composite. La matière plastique est choisie parmi celles qui sont habituellement utilisées pour les produits laminés, en particulier pour les verres laminés. En pratique, on peut choisir la matière plastique parmi les polyesters thermoplastiques, par exemple le polyvinylbutyral, les copolymères d'éthylène et d'acétate de vinyle et les polyéthylènetéréphtalates.

Particulièrement préférés sont les panneaux d'affichage dont le corps plat composite complètement fermé est un vitrage multiple, et le plus souvent, un vitrage double traditionnel à propriétés d'isolation thermique. Dans ce mode de réalisation, les dispositifs lumineux sont fixés de préférence sur la surface intérieure d'une des vitres du vitrage multiple, dans un espace entre deux des vitres. Une des vitres du vitrage multiple peut être constituée par une structure feuilletée comprenant une matière plastique, comme exposé plus haut.

Un autre mode de réalisation du panneau d'affichage selon l'invention, compatible avec tous les modes exposés jusqu'ici, est celui dans lequel les dispositifs lumineux sont choisis parmi les lampes à incandescence de filament, les lampes à vapeur d'halogène, à vapeur de métal alcalin ou alcalino-terreux, à vapeur de mercure, les lampes à décharge dans un gaz, telles que les lampes au néon ou au xénon, les composants électroniques solides semi-conducteurs, tels que les diodes électroluminescentes ("LED's"), y compris les diodes électroluminescentes organiques ("OLED's"). Les diodes électroluminescentes sont préférées en raison de leur compacité, de leur faible dégagement calorifique et de leur plus grande facilité de montage. Chaque pixel peut comprendre plusieurs dispositifs lumineux disposés côte à côte. En particulier, chaque pixel peut être composé de trois LED's colorées capables d'émettre chacune un rayonnement coloré monochromatique du spectre visible. Avantageusement, on choisit les couleurs des trois LED's d'un pixel comme rouge, jaune et bleue, de manière à pouvoir générer par leur mélange en diverses proportions ou intensité de courant électrique d'alimentation, toute couleur du spectre visible.

Lorsque le panneau d'affichage comprend des dispositifs lumineux sous forme de LED's, il est avantageux que les LED's soient laminées à l'interface d'au moins une feuille de verre et d'une feuille de matière plastique. Avantageusement, les LED's sont laminées avec la matière plastique de manière telle qu'elles se situent complètement à l'intérieur de la feuille de cette matière qui est choisie avec une épaisseur d'au moins 10 % supérieure à celle des diodes et pouvant aller jusqu'à 50 % supérieure à celle des diodes. En cas de feuille de matière plastique d'épaisseur insuffisante, il est possible de laminer ensemble un empilage de plusieurs de ces feuilles de manière à dépasser d'au moins 10 % l'épaisseur des LED's.

Un autre mode de réalisation compatible aussi avec les modes précédents consiste à alimenter les LED's en énergie électrique via un réseau de fils conducteurs laminés dans la matière plastique ou sérigraphiés sur la face intérieure d'une feuille de verre laminé. Alternativement, les LED's peuvent aussi être alimentées via une couche électro conductrice transparente recouvrant la feuille de verre sur laquelle elles reposent, à l'interface de celle-ci avec la matière plastique. Des pistes formant des chemins de courant d'alimentation des LED's peuvent avoir été découpées dans cette couche conductrice par l'action d'un rayon laser qui brûle la couche sur une faible largeur, réalisant ainsi des sillons non conducteurs qui délimitent les pistes dans le reste de la couche.

Le panneau d'affichage selon l'invention peut aussi constituer un sous ensemble d'éléments architecturaux d'une ou plusieurs parois d'un bâtiment, en particulier une paroi extérieure. De manière préférée, les éléments architecturaux sont des vitrages de fenêtres et/ou des allèges recouvrant des façades de bâtiment.

Dans un autre mode de réalisation de l'invention, compatible aussi avec les précédents, le système de contrôle à structure hiérarchique se compose d'une unité de contrôle général et d'une multitude de microcontrôleurs associés chacun à un pixel individuel. L'unité de contrôle général peut être un automate programmable ou un ordinateur de contrôle de procédés, dédiés exclusivement au contrôle d'un ou de plusieurs panneaux conformes à l'invention. Alternativement, l'unité de contrôle général peut gérer les panneaux selon l'invention simultanément à d'autres commandes et régulations de processus, par exemple des processus liés à des applications domotiques du bâtiment concerné. Les microcontrôleurs associés aux pixels individuels sont de préférence des composants électroniques disposés au contact du dispositif lumineux qu'ils contrôlent. Avantageusement, ils sont disposés derrière le dispositif lumineux, en particulier derrière chaque LED monochromatique ou encore derrière chaque trio de LED's colorées. Des unités de contrôle intermédiaires peuvent parfois être disposées dans la structure arborescente, entre le niveau central général et les microcontrôleurs de pixel, par exemple une unité intermédiaire s'adressant à un vitrage de fenêtre ou un étage de façade du bâtiment.

Selon l'invention, la communication entre l'unité de contrôle général et les unités de contrôle intermédiaire s'effectue par le canal d'un moyen de communication informatique traditionnel. De même, la communication entre les unités de contrôle intermédiaire et les microcontrôleurs de pixel peut, par exemple, s'effectuer via un réseau filaire dont les canaux d'information sont matérialisés par les conducteurs électriques de contrôle situés à l'intérieur du panneau. Alternativement, ce réseau peut aussi être constitué par des pistes découpées dans la couche conductrice transparente. En variante, cette communication entre les unités de contrôle intermédiaire et les microcontrôleurs de pixel peut encore s'effectuer via un réseau sans fil. De préférence, le réseau sans fil utilise le canal des ondes radio, par exemple un réseau selon un des standards, bien connus par eux-mêmes dans le domaine de traitement de l'information, comme ceux dénommés "Bluetooth" ou encore "Wi-Fi".

L'invention est illustrée de manière plus détaillée dans les exemples qui suivent en faisant référence aux planches de dessins dans lesquelles :
- les figures 1a et 1b schématisent une vue en coupe d'éléments architecturaux formés de doubles vitrages selon deux modes de réalisation différents. Seule une partie de ces éléments est représentée;
- les figures 2 à 8 illustrent le principe de modes de connexion de LED's via des pistes conductrices transparentes.

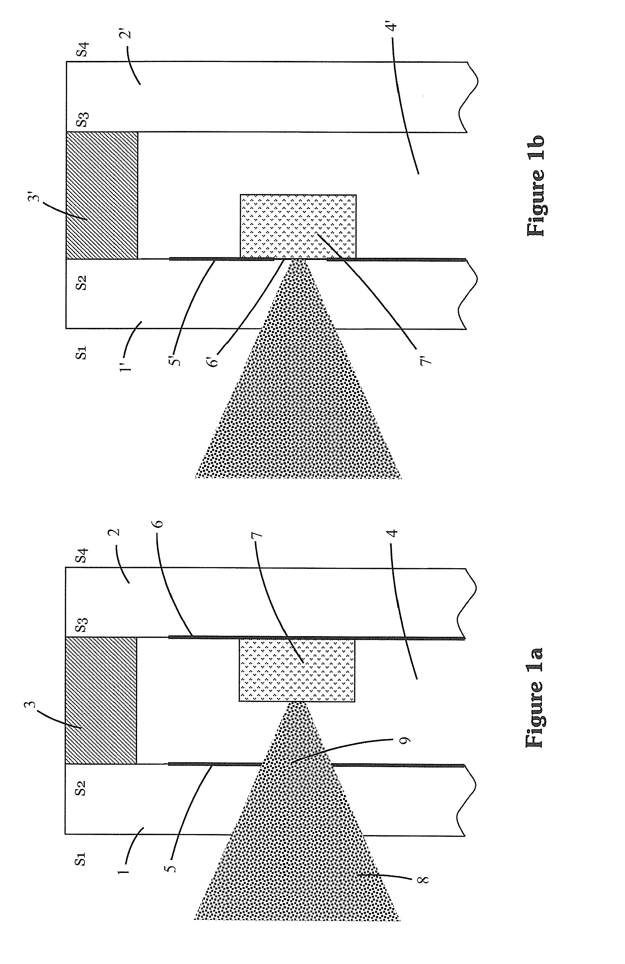

Aux figures 1a et 1b sont schématisées des vitrages de fenêtre comprenant deux vitres 1,2 et 1',2' en verre sodo-calcique clair séparés par un intercalaire rigide 3 et 3' disposé sur le périmètre des vitrages et délimitant un espace interne 4 et 4' entre les deux vitres.

A la figure 1a, des couches métalliques transparentes 5 et 6 recouvrent les surfaces intérieures des vitres 1 et 2. La couche 6 est une couche conductrice transparente d'oxydes métalliques électro conducteurs et la couche 5 une couche architecturale transparente d'oxydes métalliques améliorant les propriétés thermiques du vitrage. Sur la couche 6 sont soudées à intervalles réguliers des diodes électroluminescentes 7 (LED's). Le faisceau de lumière 8 émis par les LED's 7 s'échappe de la fenêtre en traversant la surface 9 de la couche conductrice transparente 5, ensuite en traversant la vitre 1.

A la figure 1b, on retrouve les éléments 1' à 5' qui correspondent aux éléments 1 à 5 de la figure 1a. La diode 7' a dans le mode de réalisation illustré à la figure 1b été soudée sur la couche transparente d'oxydes métalliques 6' recouvrant la face interne 5' de la vitre 1', dans laquelle un diaphragme de surface 6' a été découpé. Dans ce cas de figure, il n'y a plus de couche déposée sur la face interne de l'autre vitre 2'. La couche 5' joue ici le double rôle de couche thermique architecturale et de couche électro conductrice.

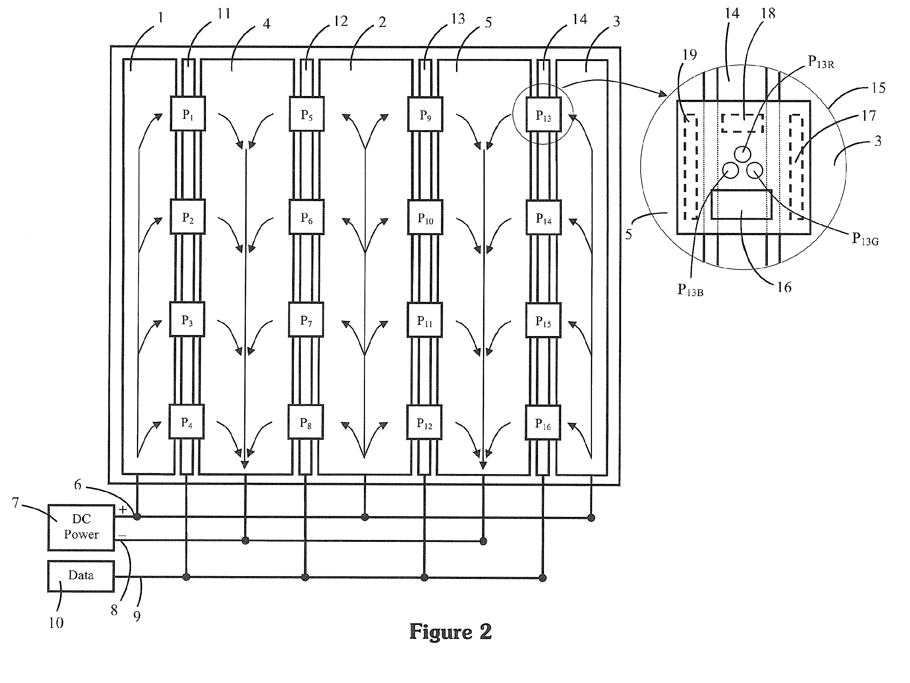

La figure 2 illustre un panneau dont le mode de connexion des dispositifs lumineux (pixels P1 à P16) se fait en parallèle au moyen de pistes conductrices qui sont des couches électro conductrices transparentes. Les pistes 1 à 3 sont connectées au pôle positif 6 d'une source de courant continu 7. Les pistes 4 et 5 sont connectées au pôle négatif 8 de la source 7. Un signal de commande 9 est délivré par un dispositif électronique 10 et permet d'adresser individuellement chaque pixel via les pistes conductrices 11 à 14. La zone agrandie 15 montre la composition du pixel P13 formé par trois LED's colorées rouge P13R, jaune P13G et bleue P13B, un microcontrôleur 16, ainsi que les pistes d'alimentation électrique 3 et 5 et la piste 14 d'adressage. Les zones 17, 18 et 19 illustrent les fixations et connexions des LED's réalisées au moyen de colle conductrice. Sur chacune des pistes conductrices 1, 4, 2, 5 et 3, on a représenté par des flèches les lignes de flux du courant électrique alimentant les LED's.

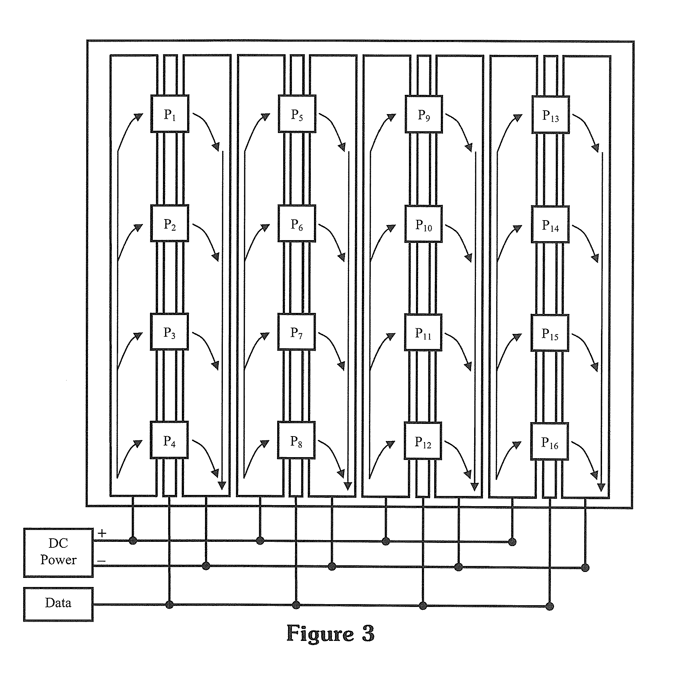

La figure 3 illustre un panneau semblable au panneau de la figure 2, mais dont le mode de connexion des dispositifs lumineux se fait en double parallèle. L'avantage de ce mode de connexion réside dans le fait que toutes les LED's sont ici placées dans le même sens.

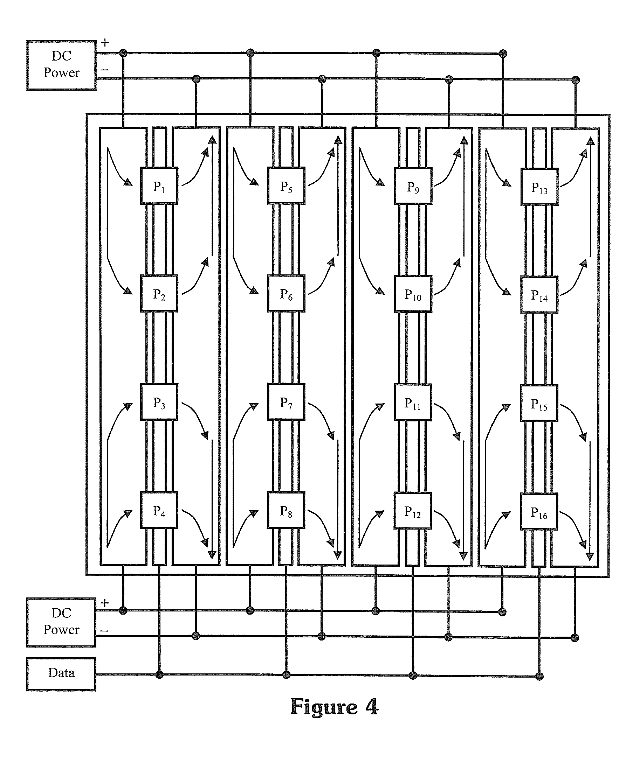

De même, à la figure 4, on a représenté une connexion en mode parallèle double symétrique. Dans ce mode, toutes les LED's sont aussi placées dans le même sens, mais l'intensité du courant électrique circulant dans les pistes conductrices est deux fois moins élevée qu'avec le montage double parallèle de la figure 3.

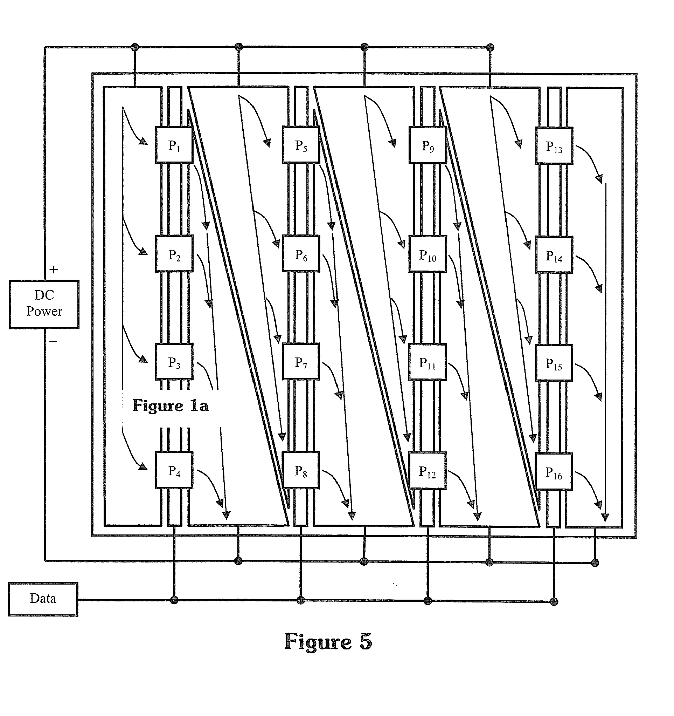

A la figure 5, on a représenté une connexion en mode parallèle alterné. L'avantage est ici d'adapter la largeur des pistes conductrices à l'intensité du courant électrique qui circule dans la piste.

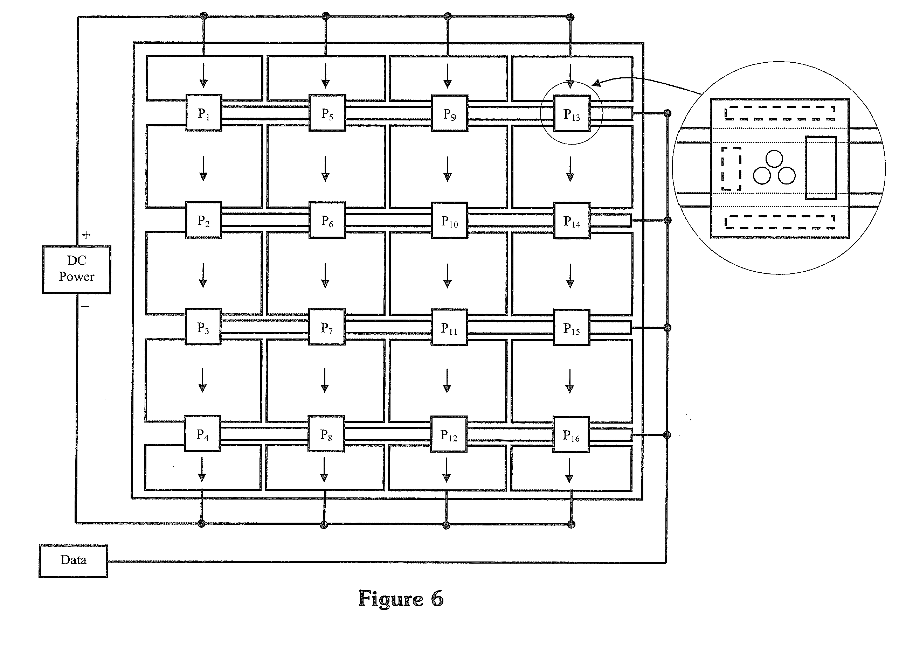

A la figure 6, on a une connexion en mode série, avec lequel l'intensité du courant électrique reste constante, mais où la tension requise est élevée.

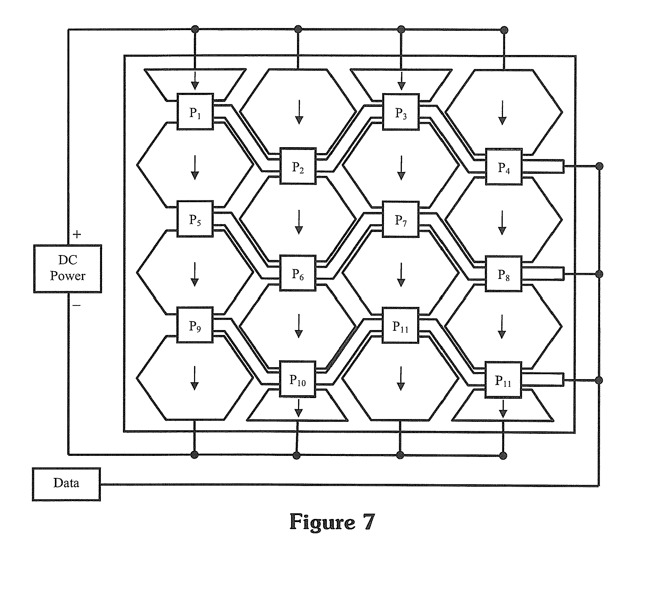

A la figure 7, le mode de connexion est encore un mode série, mais avec les LED's disposées en quinconce. Avec ce mode, les pistes conductrices ont une forme mieux adaptée à la répartition de courant.

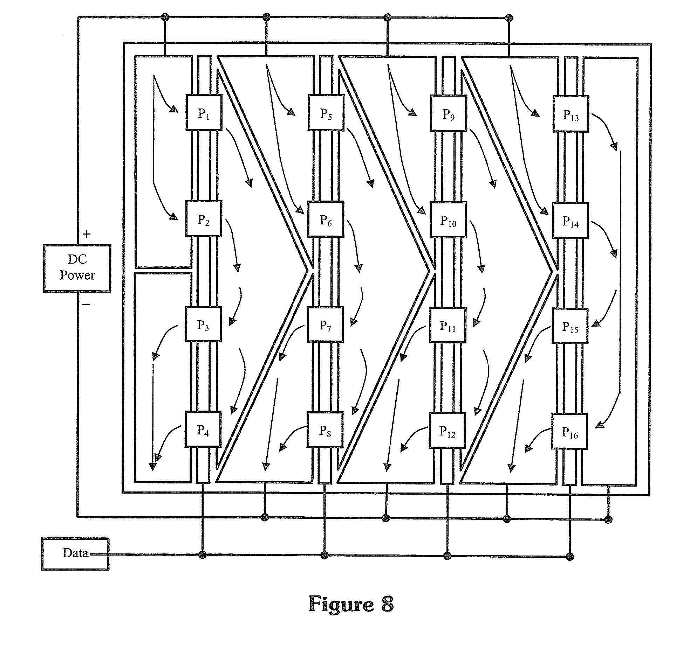

Enfin, à la figure 8, le mode de connexion est série-parallèle et combine les avantages des connexions série et parallèle.

## Revendications

1. Panneau d'affichage ayant une résolution d'affichage adaptée à ses dimensions et comprenant des dispositifs lumineux élémentaires constituant les pixels dont l'allumage et l'intensité sont pilotés individuellement par l'intermédiaire d'un système de contrôle à structure hiérarchique, **caractérisé en ce que** le panneau se présente sous la forme d'un corps plat composite complètement fermé et qu'il comprend un substrat rigide sur lequel sont fixés les dispositifs lumineux dont la totalité des conducteurs électriques d'alimentation et de contrôle sont situés à l'intérieur du panneau et sont invisibles à l'oeil nu.

2. Panneau d'affichage selon la revendication précédente, **caractérisé en ce qu'**il est transparent à la lumière visible.

3. Panneau d'affichage selon une quelconque des revendications 1 et 2, **caractérisé en ce que** le substrat rigide est du verre.

4. Panneau d'affichage selon la revendication précédente, **caractérisé en ce que** le corps plat composite complètement fermé est un vitrage multiple, les dispositifs lumineux étant fixés sur la surface intérieure d'une des vitres, dans un espace entre deux des vitres.

5. Panneau d'affichage selon la revendication 3, **caractérisé en ce que** le corps plat composite complètement fermé est un vitrage feuilleté comprenant au moins une feuille de matière plastique laminée en sandwich entre deux feuilles de verre.

6. Panneau d'affichage selon les revendications 4 et 5, **caractérisé en ce que** le corps plat composite complètement fermé est un vitrage multiple dont au moins une des vitres qui le composent est de structure feuilletée.

7. Panneau d'affichage selon une quelconque des revendications précédentes, **caractérisé en ce que** les conducteurs électriques d'alimentation et de contrôle des dispositifs lumineux sont choisis parmi les fils métalliques fins sérigraphiés et les pistes découpées dans une couche conductrice transparente recouvrant une feuille de verre.

8. Panneau d'affichage selon une quelconque des revendications précédentes, **caractérisé en ce que** les dispositifs lumineux sont des diodes électroluminescentes.

9. Panneau d'affichage selon une quelconque des revendications précédentes, **caractérisé en ce qu'**il est formé d'un sous ensemble d'éléments architecturaux d'au moins une paroi de bâtiment.

10. Panneau d'affichage selon la revendication précédente, **caractérisé en ce que** les éléments architecturaux sont des vitrages de fenêtre.

11. Panneau d'affichage selon une quelconque des revendications précédentes, **caractérisé en ce que** le système de contrôle à structure hiérarchique se compose d'une unité de contrôle général et d'une multitude de microcontrôleurs associés chacun à un pixel individuel.

12. Panneau d'affichage selon la revendication précédente, **caractérisé en ce que** l'unité de contrôle général est un automate programmable ou un ordinateur de contrôle de procédés.

13. Panneau d'affichage selon la revendication 11, **caractérisé en ce que** les microcontrôleurs sont des composants électroniques disposés au contact du dispositif lumineux qu'ils contrôlent.

14. Panneau d'affichage selon une quelconque des revendications 11 à 13, **caractérisé en ce que** des unités de contrôle intermédiaire sont interposées dans la structure hiérarchique entre l'unité de contrôle général et les microcontrôleurs de pixel.

15. Panneau d'affichage selon la revendication précédente, **caractérisé en ce que** chaque unité de contrôle intermédiaire s'adresse à au moins un élément architectural individuel.

16. Panneau d'affichage selon une quelconque des revendications 11 à 15, **caractérisé en ce que** la communication entre l'unité de contrôle général et les unités de contrôle intermédiaire s'effectue par le canal d'un moyen de communication informatique traditionnel.

17. Panneau d'affichage selon une quelconque des revendications 1 et 11 à 16, **caractérisé en ce que** la communication entre les unités de contrôle intermédiaire et les microcontrôleurs de pixel s'effectue via un réseau filaire dont les canaux d'information sont matérialisés par les conducteurs électriques de contrôle situés à l'intérieur du panneau.

18. Panneau d'affichage selon une quelconque des revendications 1 et 11 à 16, **caractérisé en ce que** la communication entre les unités de contrôle intermédiaire et les microcontrôleurs de pixel s'effectue via un réseau qui est principalement constitué de pistes découpées dans la couche conductrice transparente.

19. Panneau d'affichage selon une quelconque des revendications 1 et 11 à 16, **caractérisé en ce que** la communication entre les unités de contrôle intermédiaire et les microcontrôleurs de pixel s'effectue via un réseau sans fil.

20. Panneau d'affichage selon la revendication précédente, **caractérisé en ce que** le réseau sans fil utilise le canal des ondes radio.
